# EUROPEAN PATENT APPLICATION

(11) **EP 4 286 337 A1**
(43) Date of publication of application: **06.12.2023**
(21) Application number: 22927501.1
(22) Date of filing: 06.09.2022
(51) Int. Cl.: C01F 7/47, C01F 7/06

(54) **METHOD OF PROCESSING BAUXITES TO PRODUCE ALUMINA**

(30) Priority: 15.02.2022 RU 2022103719
(71) Applicant: Obshchestvo s Ogranichennoy Otvetstvennost'yu "Obedinennaya Kompaniya Rusal Inzhenerno-Tekhnologicheskiy Tsentr", Krasnoyarsk 660111 (RU)
(72) Inventor: MANN, Viktor Khrist'yanovich, Krasnoyarsk, 660111 (RU); ITSKOV, Yakov Yur'evich, Krasnoyarsk, 660111 (RU); PECHENKIN, Maksim Nikolaevich, Krasnoyarsk, 660111 (RU); ORDON, Sergej Fedorovich, Krasnoyarsk, 660111 (RU); PANOV, Andrej Vladimirovich, Krasnoyarsk, 660111 (RU); MIL'SHIN, Oleg Nikolaevich, Krasnoyarsk, 660111 (RU)
(74) Representative: Atalay, Baris
(86) International application number: PCT/RU2022/050278
(87) International publication number: WO 2023/158340

(57) **Abstract**

The proposed method relates to the field of non-ferrous metallurgy. The method for processing bauxites to produce alumina, said method comprising: filtering an alumina process slurry obtained after a digestion of the bauxites, wherein the slurry, after leaching, dilution or thickening, is filtered at a temperature of at least 95 °C to obtain a filtrate representing a green liquor after the filtration and a solid phase of a red mud, washing the solid phase of the red mud on filtration equipment, wherein the washing is carried out with hot water, preferably at a temperature of below 98 °C, to achieve specified concentrations of the green liquor and a liquid phase of the red mud, where the filtrate is directed to security filtration and/or precipitation, and the water after washing the red mud is fed for the dilution of the slurry after the digestion of the bauxites and/or the dilution of the filtrate to obtain a specified concentration of the green liquor, wherein a resulting cake is a waste product. The method results in enhancing liquor productivity at precipitation and reducing the consumption of soda, therefore, the efficiency of alumina production improves due to the saving of soda, heat and energy resources, and the production of smelter-grade alumina increases.

## Description

### Technical Field

The invention relates to non-ferrous metallurgy, in particular, to the production of alumina by the Bayer process or Bayer-sintering method, namely, to methods of improving the liquor productivity by effective separation and washing of mud slurries.

### Background

The high liquor productivity at precipitation enables to maintain low specific flows of the green liquor that ensures a low consumption of the main fuel and energy resources for alumina production. The currently achieved productivity of the liquor is limited by the conventional technology of thickening and washing of red mud in tanks and vessels. This technology does not allow increasing the concentration of the green liquor, and, consequently, its productivity, without increasing the alkali losses with the liquid phase of the disposed red mud. In addition, significant volumes of liquors are required for precipitation and washing of red mud, which leads to prolonged contact of the solid and liquid phases and auto-precipitation (loss of alumina with red mud).

The problem of efficient separation and washing of mud slurries and enhancement of liquor productivity of is solved by a number of technical solutions.

The related art discloses a method for filtering mud slurries in the tail (end) of alumina production process (Abhijeet Bandi, Kausikisaran Misra, N. Nagesh, Uttam Kumar Giri and Rama Chandra Nahak, Improvement of Mud Circuit Efficiency while Processing East Coast Bauxite of India, Proceedings of the 38th International ICSOBA Conference, November 16 - 18, 2020), which consists in filtering a slurry of waste mud for the purpose of its dry storage on a bauxite residue disposal area.

The disadvantages of this method include the following:
- impossibility to exclude the red mud thickening and washing areas from the production process;
- lack of effect on the liquor productivity;
- lack of significant savings in resources and energy consumption in alumina production.

The related art discloses a method of filtering mud slurries in the tail (end) of alumina production process (Sedat Arslan, Gökhan Kürsat Demir, Bekir Çelikel and Meral Baygül, Implementation and Optimization of Filter Press in Red Mud Washing Process at Eti Aluminum, Proceedings of the 36th International ICSOBA Conference, Belem, Brazil, October 29 - November 1, 2018), which consists in filtering a slurry of waste mud for the purpose of its dry storage in a bauxite residue disposal area.

The disadvantages of this method include the same problems as in the first example.

The related art discloses a method of increasing the productivity of aluminate liquors (Lu Zijian, Zhaoqun, Xie yanli, Bi shiwen, Yang Yihong, The application of additives in the precipitation of Bayer sodium aluminate liquors, Light Metals, TMS The Minerals, 2004). The method proposes options for increasing the efficiency of the precipitation process by introducing various additives into the process. The additives affect not only the productivity, but also the size and quality of aluminum hydroxide.

The disadvantages of this method include the following:
- with this method, it is impossible to exclude the red mud thickening and washing areas from the production process;
- the use of additives leads to additional contamination of solutions with organic or inorganic impurities, which require solutions for their removal;
- lack of savings in soda and flocculant consumption;
- need to use expensive reagents.

The method closest to the claimed one is a method of processing low-quality bauxite to alumina (Patent KZ No. 13802, publication date: December 15, 2003). In the method, red mud is filtered directly after thickening in several stages. The filtered mud of each stage is re-slurried with the filtrate of the subsequent filtration stages, the reslurried mud is heated to a temperature not exceeding 95 °C, and hot water is fed to the last stage in an amount that ensures the concentration of red mud slurry of not higher than 135 g/L in terms of caustic alkali (Na2O_{caustic}) at the first stage, and the filtration is carried out with a caustic to alumina ratio not lower than the caustic to alumina ratio corresponding to the equilibrium green liquor. The number of filtration stages is determined by the residual alkali content in the liquid phase of the filtered red mud of the last stage. The method enables to reduce the specific consumption of hot water for red mud washing, aluminum hydroxide and alkali losses, and flocculant consumption. It also allows reducing the required production space in the mud circuit.

The disadvantages of this method include the following:
- the process anticipates several stages of filtration that increases the amount of the equipment required for the implementation of the process by several times;
- low degree of mud washing with filtrates of subsequent stages, which reduces the efficiency of the process and increases the losses of alkali;
- thickening remains in the production process that does not allow to entirely eliminate the alumina losses with the solid phase due to auto-precipitation, as well as completely abandon the use of flocculants;
- the liquor concentration cannot exceed 135 g/L in terms of Na2O_{caustic}, which is not the optimal parameter for achieving the maximum liquor productivity;
- relatively low filtration temperature of below 95 °C, which leads to additional losses of alumina from the liquor due to auto-precipitation and low resistance of the cloth.

### Disclosure of the Invention

The objective of the present invention is to develop a cost-effective method for increasing the liquors productivity in the production of alumina from bauxites by increasing its concentration and reducing the caustic to alumina ratio. An increase in the concentration and a decrease of the caustic to alumina ratio is achieved by replacing thickening and washing of red mud with filtration and washing of red mud on the filtration equipment thus decreasing the specific consumption of hot water for mud washing. The obtained green liquor with an elevated concentration and a lower caustic to alumina ratio is processed as per the existing alumina production process. In addition, said method provides for a significant reduction of losses of soluble alumina and alkali with the liquid phase of the mud.

The technical effect lies in enhancing the productivity of the precipitation, reducing the consumption of soda, and thus, improving the efficiency of alumina production due to the saving of soda, heat and energy resources, and increasing the production of smelter-grade alumina.

Said technical effect is achieved by a method for processing bauxites to produce alumina, said method comprising the filtration of mud slurries (slurry after digestion of bauxites, diluted slurry or thickened slurry), which is performed using the filtration equipment for the high rate separation of the solid and liquid phases. A filtrate, which represents a green liquor, is then fed to the security filtration unit to remove the remaining solid phase, whereas a part of the filtrate, when the specified quality in terms of the content of solid particles is achieved, can be sent directly to precipitation. After the security filtration, the liquor is directed to precipitation for extracting aluminum hydroxide. A resulting cake from the mud slurry filtration is washed in a squeezed layer on the filter with hot water at a temperature of preferably no more than 98 °C to separate the solid phase of the mud from the liquor by washing. The wash water from the mud cake washing is directed to diluting the slurry after the bauxite digestion to achieve the specified concentration of the green liquor. The filter cake is a waste product suitable for storage in the mud disposal area by a dry, semi-dry or wet method.

The proposed method of the so-called "direct filtration" of mud slurries will enable to reduce alumina losses by avoiding auto-precipitation of the green liquor in the thickening-washing system, reduce the consumption of hot water for washing, which, with a high mud washing factor, will increase the concentration of the green liquor, reduce the caustic to alumina ratio and increase the liquor productivity. Increasing the liquor productivity will reduce the specific flow rates of the liquors per tonne of produced alumina that will improve the throughput of alumina production and reduce the costs in terms of the key performance indicators.

The introduction of proposed method will have a number of advantages, namely, it will enable to do the following:
- replace two operations i.e. thickening and washing of red mud in the existing tanks and vessels with one operation, namely filtration and washing on the filtration equipment that will reduce alumina losses caused by auto-precipitation;
- reduce the losses of soluble alkali and alumina with the liquid phase of the disposed mud by 60-75 % as compared with the current level by reducing the amount of moisture in the disposed mud and returning the filtrates obtained from the cake washing to alumina production;
- reduce heat consumption for evaporation of spent liquors by increasing the concentration of the green liquor, reduce fuel consumption in the sintering area by increasing the share of the Bayer circuit (for Bayer-Sintering combined processes), and reduce or completely eliminate the consumption of flocculants by eliminating their use for thickening and washing;
- reduce the consumption of electric power and compressed air by reducing the specific flows of the liquor in the precipitation and evaporation areas, reducing the share of the sintering circuit (as a particular case of alumina production by the Bayer- sintering process) and replacing the tanks and pumping equipment in the thickening-washing areas with filter presses.

The method is supplemented by its embodiments.

In the particular embodiment of the invention, a slurry obtained after the bauxite digestion is used as a slurry for filtration. The filtrate is sent to the agitated collecting tanks for mixing with the wash water from mud washing, the mixed liquor is furthermore sent to the liquor security filtration, wherein a part of the strong filtrate, upon achieving the specified quality in terms of the content of solid particles, can be supplied directly to precipitation after dilution with water. The filter cake is washed with hot water in a squeezed layer. The wash water from the cake washing is directed to the agitated tanks for the dilution of the filtrate. The washed cake is re-slurried with water and pumped to the mud disposal area, or stored in the form of a cake by a dry or semi-dry method.

In the particular embodiment of the invention, a thickened slurry obtained after thickening the diluted slurry, is used as a slurry for filtration. The thickener overflow is sent for liquor security filtration. The filtrate is sent to the agitated collecting tanks and then to the liquor security filtration, wherein a part of the strong filtrate, upon achieving the specified quality in terms of the content of solid particles, can be supplied directly to precipitation. The filter cake is washed with hot water in a squeezed layer. The wash water from the cake washing is fed to the agitators (dilution agitators) to obtain a diluted slurry. The washed cake is re-slurried with water and pumped to the mud disposal area, or stored in the form of a cake by a dry or semi-dry method.

### Brief Description of the Drawings

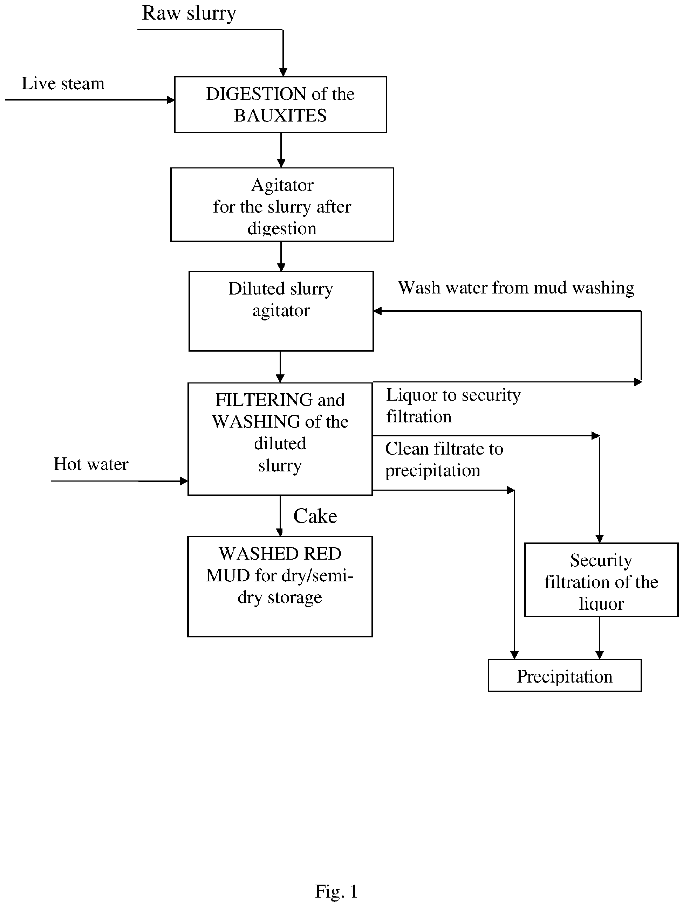

Fig. 1, 2, and 3 show the alternative arrangements of the process flow diagrams for processing bauxites to produce alumina.

The differences between the alternative arrangements lie in the nature of the filtered slurry.

Fig. 1 shows a process flow diagram of the filtration and washing of a diluted slurry.

The diluted slurry, which is fed to filtration, is obtained from digesting a raw slurry. The slurry after the bauxite digestion, obtained by digesting the raw slurry, is diluted with the wash water supplied from the cake washing with water. The slurry is fed to filtration to separate and wash the solid phase. The temperature of the initial diluted slurry, which is fed to the filter presses, is preferably up to 110 °C, the content of solid particles in the slurry is approx. 40-110.0 kg/m³.

The filtrate (green liquor) is supplied to the liquor security filtration unit to remove solid particles. Upon achieving the appropriate quality (Fe2O3 content is no more than 0.016 g/dm³), a part of the filtrate can be fed directly to precipitation, bypassing the security filtration.

The red mud cake obtained in the process of filtration is washed with water to remove the green liquor (specific water consumption is no less than 2.0 m³/t of dry mud). The hot water temperature is preferably no more than 98 °C. Wash water (water from washing) obtained at the cake washing stage is supplied to dilute the slurry after the bauxite digestion. The washed red mud with a moisture content of W 25-30 % is re-slurried with water returned from the mud disposal area and then is pumped in the form of slurry, or in the form of cake to the mud disposal area.

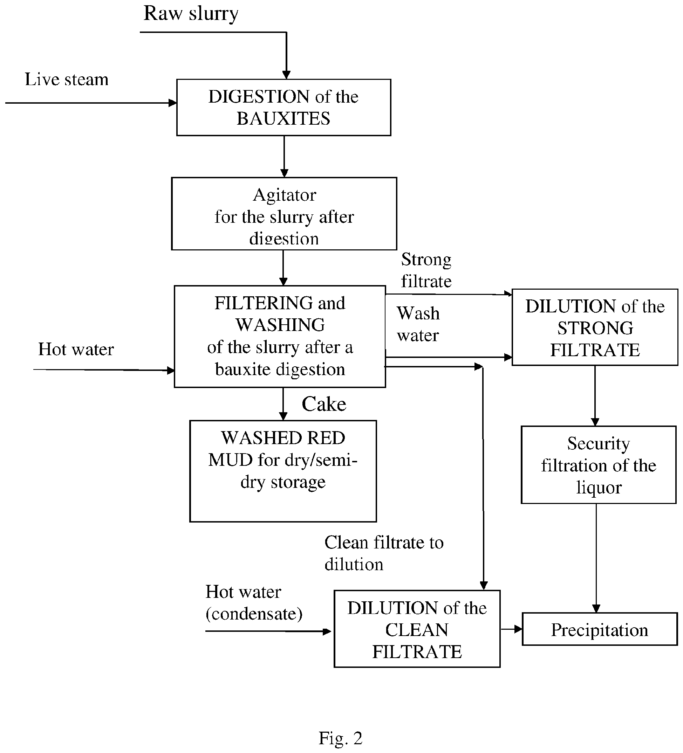

Fig. 2 shows a process flow diagram of the filtration and washing of the slurry after the bauxite digestion.

The initial slurry for filtration is obtained by digesting the raw slurry. The slurry, obtained in the process of digestion of the raw slurry, is fed from digestion to filtration for separation and washing of the solid phase. The temperature of the initial slurry after bauxite digestion, which is fed to the filter presses, is up to 120 °C, the content of solid particles in the slurry is about 50-180.0 kg/m³. The filtrate (strong green liquor) is sent for dilution with wash water to obtain the specified liquor concentration. The resulting green liquor is fed to the security filtration unit to remove solid particles. Upon achieving the appropriate quality (Fe2O3 content is no more than 0.016 g/dm³), a part of the filtrate can be transferred for dilution to obtain the specified concentration and then supplied to precipitation, bypassing the security filtration.

The red mud cake obtained in the process of filtration is washed with water to remove the green liquor (the specific water consumption is no less than 2.0 m³/t of dry mud). The hot water temperature is preferably no more than 98 °C. The wash water obtained at the cake washing stage is sent for dilution of the strong green liquor. The washed red mud with a moisture content of W 25-30% is re-slurried with water returned from the mud disposal area and then is pumped in the form of slurry, or in the form of cake to the mud disposal area.

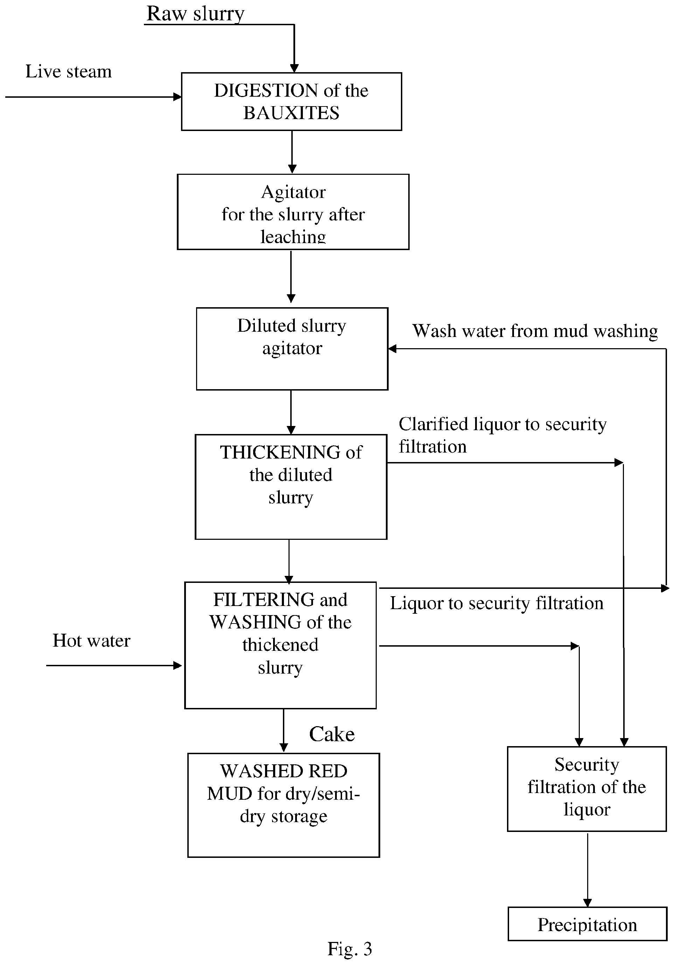

Fig. 3 shows a process flow diagram of the thickened slurry filtration and washing.

The initial thickened slurry for filtration is obtained by digesting the raw slurry. The slurry obtained after the digestion of the raw slurry is diluted with wash water obtained from the washing of the cake with water. The diluted slurry undergoes thickening. In the process of thickening, two products are obtained: a clarified liquor and a thickened slurry. The clarified liquor is sent to the security filtration unit for removal of solid particles. The thickened slurry is fed to filtration to separate and wash the solid phase. The temperature of the initial thickened slurry, which is fed to the filter presses, is about 100-105 °C, the content of solid particles in the slurry is 400-800 kg/m³.

The filtrate (green liquor) is sent to the liquor security filtration unit to remove solid particles.

The red mud cake obtained in the process of filtration is washed with water to remove the green liquor (the specific water consumption is no less than 2.0 m³/t of dry mud). The hot water temperature is preferably no more than 98 °C. The wash water obtained at the cake washing stage is sent for slurry dilution after digestion. The washed red mud with a moisture content of W 25-30% is re-slurried with water returned from the mud disposal area and then is pumped in the form of slurry or in the form of cake to the mud disposal area.

### Detailed Description of the Embodiments

The method is intended for alumina production from bauxite processing, said method comprising high-rate separation and washing of alumina production slurries obtained from the bauxite digestion. Filtration of mud slurries (slurry after digestion of bauxites, diluted slurry or thickened slurry) is carried out using the filtration equipment at a temperature of at least 95 °C, preferably 95-120 °C. The cake is washed on the filter at a water temperature of no more than 98 °C with a specific hot water consumption of at least 2.0 m³/t of mud.

Particular embodiments in terms of the equipment lie in the use of the following filtration equipment: centrifuges, filter presses, hyperbaric filters, belt filter presses.

The filtrate obtained at the slurry filtration stage is supplied to an additional purification operation, i.e. security filtration, or directly to precipitation. The wash water from the washing stage is used either to dilute the initial slurry or to dilute the filtrate to achieve the specified concentration of the green liquor. After the washing stage, the filter cake is either re-slurried and pumped to the mud disposal area, or is transported in dry form to the mud disposal area for storage by a dry method.

Thus, the proposed method for producing alumina from bauxite provides a high rate of separation and washing of slurries, which allows increasing the concentration of the green liquor, reducing the soluble losses of alumina and alkali that improves the efficiency of alumina production.

*The following examples illustrate the proposed method.*

### Example 1

A slurry after a digestion of the bauxites was diluted with wash water after washing the mud on the filter. The slurry was diluted with wash water to obtain the liquid phase concentration of 160 g/L in terms of caustic alkali, whereas a caustic to alumina molar ratio of the liquor was 1.73 (no change as compared with the reference case). The resulting diluted slurry was filtered at a pressure of 8 atm and a temperature of 105 °C to obtain a filtrate and a cake. The cake was washed with hot water at a temperature of 80 °C. The amount of hot water for washing was supplied to achieve a filtrate concentration of 160 g/L in terms of Na2O_{caustic}. The losses of soluble alumina and alkali decreased by 64 wt.%. The filtrate (green liquor) underwent precipitation, and the liquor productivity increased by 5.0 kg/m³.

### Example 2

A slurry after a digestion of the bauxites was filtered at a pressure of 8 atm and a temperature of 120 °C, wherein a filtrate and a cake were obtained. The cake was washed with hot water at a temperature of 98 °C. The amount of hot water for washing was fed to obtain the concentration in the mixture of the slurry filtrate after digestion and wash water from the cake washing of 160 g/L in terms of caustic alkali, while a caustic to alumina molar ratio of the liquor was 1.68 (with a decrease by 0.05 units as compared with the reference case). The losses of soluble alumina and alkali decreased by 69 wt.%. The mixture of filtrate and wash water (green liquor) underwent precipitation, and the liquor productivity increased by 15.0 kg/m³.

### Example 3

A slurry after a digestion of the bauxites was diluted with wash water obtained after washing the mud on a filter in a squeezed layer. The slurry was diluted with wash water to obtain the liquid phase concentration of 160 g/L in terms of caustic alkali, while a caustic to alumina molar ratio of the liquid phase was 1.68 (with a decrease by 0.05 units as compared with the reference case). The resulting diluted slurry underwent thickening. The clarified part was separated from the thickened part. The resulting thickened slurry was filtered at a pressure of 8 atm and a temperature of 95 °C to obtain a filtrate and a cake. The cake was washed with hot water at a temperature of 95 °C. The amount of hot water for washing was fed to obtain a diluted slurry concentration of 160 g/L in terms of Na2O_{caustic}. Therein the caustic to alumina molar ratio of the liquor was 1.68, which indicates the absence of alumina losses due to auto-precipitation. The losses of soluble alumina and alkali decreased by 61 wt.%. The filtrate and the clarified part from thickening of the diluted slurry were combined and underwent precipitation, and the liquor productivity increased by 12.4 kg/m³.

### Example 4

A slurry after a digestion of the bauxites was diluted with wash water after washing the mud on the filter. The slurry was diluted with wash water to obtain the liquid phase concentration 160 g/L in terms of caustic alkali, while a caustic to alumina ratio of the liquor was 1.65. The resulting diluted slurry was filtered at a pressure of 6 atm and a temperature of 105 °C to obtain a filtrate and a cake. The cake was washed with hot water at a temperature of 90 °C. The amount of hot water for washing was fed to obtain a filtrate concentration of 160 g/L in terms of Na2O_{caustic}. The losses of soluble alumina and alkali decreased by 59 wt.%. The filtrate (green liquor) underwent precipitation, and the liquor productivity increased by 12.0 kg/m³.

### Example 5

A slurry after a digestion of the bauxites was diluted with wash water after washing the mud on the centrifuge. The slurry was diluted to obtain the liquid phase concentration of 160 g/L in terms of caustic alkali (in terms of Na2O), while the caustic to alumina molar ratio of the liquid phase was 1.65. The resulting diluted slurry underwent thickening in the thickeners, where the clarified part was separated from the thickened part. The resulting thickened slurry was centrifuged at a temperature of 95 °C to obtain a centrate and a cake. The cake was washed with hot water at a temperature of 95 °C. The amount of hot water for washing was to obtain the diluted slurry concentration of 160 g/L in terms of Na2O_{caustic}. Therein, the caustic to alumina molar ratio of the liquor was 1.65, which indicates the absence of alumina losses due to auto-precipitation. The losses of soluble alumina and alkali decreased by 60 wt.%. The centrate from the centrifuge and the clarified part after thickening of the diluted slurry were combined, filtered on the security filtration unit and then said mixture underwent precipitation, and the liquor productivity increased by 13.5 kg/m³.

### Example 6

A slurry after a digestion of the bauxites was diluted with wash water after washing the mud on a filter in a squeezed layer. The slurry was diluted with wash water to obtain the liquid phase concentration of 160 g/L in terms of caustic alkali, while the caustic to alumina molar ratio of the liquid phase was 1.64 (with a decrease by 0.09 units as compared with the reference case). The resulting diluted slurry underwent thickening. The clarified part was separated from the thickened part. The resulting thickened slurry was filtered at a pressure of 3 atm and a temperature of 95 °C to obtain a filtrate and a cake. The cake was washed with hot water at a temperature of 98 °C. The amount of hot water for washing was fed to obtain the diluted slurry concentration of 160 g/L in terms of Na2O_{caustic}. Therein, acaustic to alumina molar ratio of the liquor was 1.64, which indicates the absence of alumina losses due to auto-precipitation. The losses of soluble alumina and alkali decreased by 57 wt.%. The centrate and the clarified part were combined after thickening of the diluted slurry, filtered on the security filtration unit and said mixture underwent precipitation, and the liquor productivity increased by 14.4 kg/m³.

Thus, the proposed method for improving the liquor productivity - which is based on using the filtration and washing technology - ensures the effective washing of mud from soluble alkali and alumina, and also increases the liquor productivity by increasing their concentration and reducing the caustic to alumina ratio. Accordingly, the achieved liquor productivity is 5-15 kg/m³ higher as compared with the liquor productivity obtained by the conventional method.

As a general example, the method includes grinding of bauxites with an evaporated spent liquor, digestion thereof, dilution of the slurry from the bauxite digestion, desilication of the green liquor, thickening and/or filtration and washing of the red mud slurry, extraction of aluminum hydroxide from the green liquor, followed by the separation of aluminum hydroxide from the spent liquor, further washing and calcination of aluminum hydroxide, sintering of red mud and/or bauxite with soda and limestone, digestion of the resulting sinter, thickening and/or filtration and washing of the digested sinter slurry to obtain a green liquor and further desilication and decomposition of the green liquor, wherein the filtration of red mud and digested sinter slurry is carried out immediately before or after thickening. The filtered mud is washed with hot water directly on the filtration equipment, said water is added in an amount that provides for the required concentrations of the green liquor and the liquid phase of the cake, which is a waste product, wherein the filtration is carried out at a caustic to alumina ratio of no lower than the caustic to alumina ratio of the equilibrium green liquor. The method allows increasing the liquor productivity, reducing the heat consumption for liquor evaporation, losses of aluminum hydroxide and alkali with red mud, as well as reducing the consumption of a flocculant, compressed air and electric power. The proposed method provides for the simultaneous carrying out two technological processes, i.e. slurry filtration and washing using the same equipment. In the production of alumina, several slurries are generated sequentially: the first one is a slurry after bauxite digestion, and this slurry is diluted with wash water to obtain a diluted slurry. Said diluted slurry undergoes thickening to obtain a thickened slurry. The proposed alumina production processes are used depending on the type of a slurry. At each alumina refinery the concentrations of the green liquor differ and depend on the maximum productivity achieved in the precipitation area. For example, for the liquor at the Urals alumina refinery, this value ranges within 160-170 g/L in terms of Na2O_{caustic}.

## Claims

1. A method for processing bauxites to produce alumina, said method comprising:
- filtering an alumina process slurry obtained after a digestion of the bauxites, wherein the slurry, after leaching, dilution or thickening, is filtered at a temperature of at least 95 °C to obtain a filtrate representing a green liquor after the filtration and a solid phase of a red mud,
- washing the solid phase of the red mud on filtration equipment, wherein the washing is carried out with hot water, preferably at a temperature of below 98 °C, to achieve specified concentrations of the green liquor and a liquid phase of the red mud, where the filtrate is directed to security filtration and/or precipitation, and the water after washing the red mud is fed for the dilution of the slurry after the digestion of the bauxites and/or the dilution of the filtrate to obtain a specified concentration of the green liquor, wherein a resulting cake is a waste product.

2. The method of claim 1, wherein the slurry is filtered after the digestion of the bauxites, and the resulting cake is washed with hot water.

3. The method of claim 1, wherein the slurry is filtered after the dilution of the slurry from the bauxite digestion, and the resulting cake is washed with hot water.

4. The method of claim 1, wherein the thickened slurry is filtered after the thickening of the diluted slurry, and the resulting cake is washed with hot water.

5. The method of claim 1, wherein the filtration is carried out preferably at a temperature of 95-120 °C.

6. The method of claim 1, wherein the red mud is washed at a specific consumption of hot water of at least 2.0 m³/t of mud.

7. The method of claim 1, wherein filter presses, centrifuges, belt filter presses, and hyperbaric filters are alternatively used for the filtration and washing of the mud.

8. The method of claim 1, wherein the filtrate is fed directly to the precipitation, bypassing the security filtration.
